(19) **Europäisches Patentamt**

**European Patent Office**

**Office européen des brevets**

(11) Publication number: **0 229 869 B1**

# (12) EUROPEAN PATENT SPECIFICATION

(45) Date of publication of patent specification :
06.02.91 Bulletin 91/06

(51) Int. Cl.⁵ : **G08B 13/22**

(21) Application number : **86107978.8**

(22) Date of filing : **11.06.86**

(54) System for remote control of the antitheft protection devices of a property.

(30) Priority : **13.11.85 IT 8362385**
**13.01.86 IT 8360286**

(43) Date of publication of application :
**29.07.87 Bulletin 87/31**

(45) Publication of the grant of the patent :
**06.02.91 Bulletin 91/06**

(84) Designated Contracting States :
**AT BE CH DE FR GB IT LI LU NL SE**

(56) References cited :
**FR-A- 2 449 771**
**GB-A- 2 051 442**

(56) References cited :
**GB-A- 2 079 837**
**GB-A- 2 095 016**
**US-A- 3 891 980**
**US-A- 4 090 182**
**US-A- 4 143 368**

(73) Proprietor : **DELTA ELETTRONICA s.p.a.**
**Via Astico 41**
**I-21100 Varese (VA) (IT)**

(72) Inventor : **Memmola, Serafino**
**Via Cimabue, 62**
**I-21100 Varese (VA) (IT)**

(74) Representative : **Ferraiolo, Ruggero et al**
**Via Napo Torriani, 10**
**I-20124 Milano (IT)**

## Description

The present industrial invention refers to a system for remote control of the antitheft protection devices of a property, this word being intended in the text and in the claims to indicate a room or an area or a cabinet or a vehicle or another delimited space and referring to the protection and/or of the accesses to said property and/or of the means delimiting it and/or of the property itself.

Many types of remote control system for controlling connection and disconnection of said protection devices exist up to now as for instance that teached by the U.S. Patent A 090 182 (Young), and among said systems the most sophisticated are the automatic types, as that teached by the U.K. patent A-2 051 442 (Howard). The remote control device according to said patent conprehends a control unit installed in a car and a portable unit carried by the driver, the control unit transmits a coded first signal, the portable unit by receiving and recognising said signal trasmits a coded second signal, so that when the control unit receives and recognize said second coded signal controls the connection of the security system, while when it does not receives said second coded signal, because the distance between the portable and the control units exceeds a predeterminated value in relation to the power of the device, the control signal controls the connection of the security system, so the connection of the security system is controlled automatically only by the action of moving away from the protected property of the person with the remote control device and viceversa the disconnection is automatically controlled by approaching of said person with the portable unit.

This system eliminates the disadvantages of the possible forgetting to connect the protection devices and their possible incidental disconnection, non intended by the person having the remote control, but involves the disadvantage that when said person is at a limit distance for reception or non-reception of the signals, which distance can vary according to the contingent conditions of propagation of the waves used for remote control, the control can be uncertain i. e. repeatedly disconnect and connect said protection devices, so that said devices can be disconnected without the person having the remote control intends to do so or is aware of it.

The aim of the system in conformity with the present invention is to eliminate also said disadvantage.

The system for the remote control of the antitheft protection devices of a property in conformity with the present invention, is composed of a portable remote control unit, including at least a transmitter, a power source and a encoder, and of a receiver unit installed near the property and mechanically and/or electrically connected to the control of the protection devices, and including at least a receiver a specific power source or devices for connection to a distribution network or to accumulators of said power employed for other maim uses, and a decoder-comparator characterized in that the encoder of the portable remote control unit is partly programmed during assemblage and partly programmable by hand control during operation, and suited to supply the transmitter in such a way that the latter sends in continous repetition a codified message, and the decoder-comparator of the receiver unit is also partly programmed during assemblage and partly programmmable during operation, suited for decoding and matching the encoded signals piked up by the receiver, and, when the receiving of said recognised signals stops, for sending a signal for controlling the connection of said protection devices and for modifying automatically the programmable part of the code of the decoder itself, and when signals are successively received and recognised having the code modifyed in the programmable part through the hand control on the encoder of the remote control unit, for sending of the contrary a signal for controllling the disconnection of said protection devices and for modifying again the programmable part of the code of the decoder itself, operating so the remote control of the property in an semiautomatic way, and that is in an authomatic way for the connection, of said protection devices only by the action of moving away from the property of the person having the portable remote control unit without requiring a voluntary control of said person, and in a manual way for controlling the disconnection of said devices but only after the person having the portable unit has approached to the property. within a predetermined range.

In an improvement of said embodiment the transmitter and the recei ver are suited for sending and respectively for receiving radio waves and the encoder of the transmitter consists of a device suited for sending messages consisting of sequences of signals with pulse width modulation based upon the encoding, partly programmed during assemblage and partly programmable through hand control during operation and having short length, within the range even of milliseconds, at intervals one from the other much longer than the above mentioned length, within the range of seconds and more, the said times being so predetermined and the components of the transmitting unit being so selected that the transmission of intermittent messages involves, in spite of their continuity, a power consumption so limited that a normal micropile, rechargeable or not, can ensure the continuous operation of the transmitting unit for one and even more years, and furthermore the receiver unit includes a decoder suited for causing the connection of said protection devices after a predetermined time of non-reception of messages, which time is generally determined on the base of a predetermined number of expected encoded messages, and in addition suited for causing the signal controlling disconnection of said devices as soon as the first or at least the second expected message with modified encoding for disconnection is received.

In order to more fully understand the system in conformity with the present invention, as an example only, an embodiment shall be described with reference to the accompanying drawings wherein :

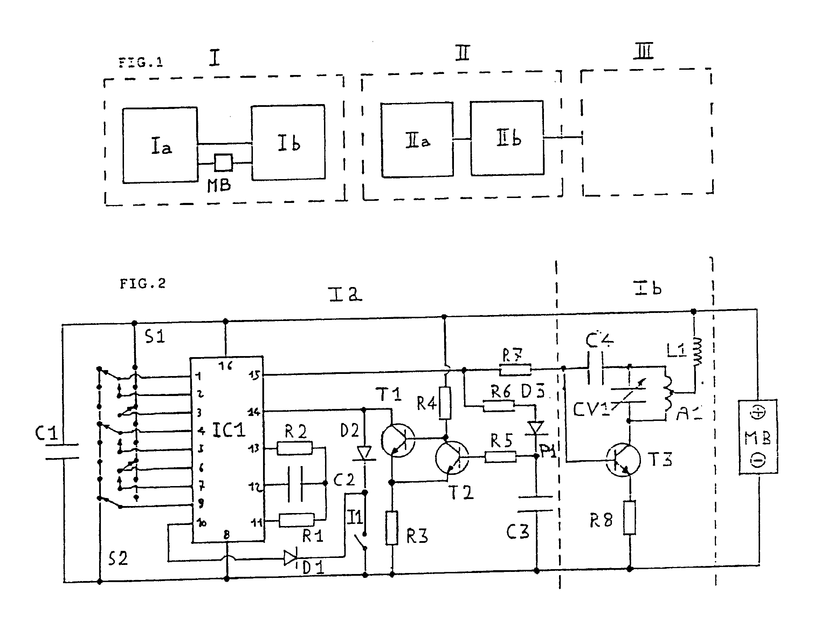

- Fig. 1 is a block diagram ;

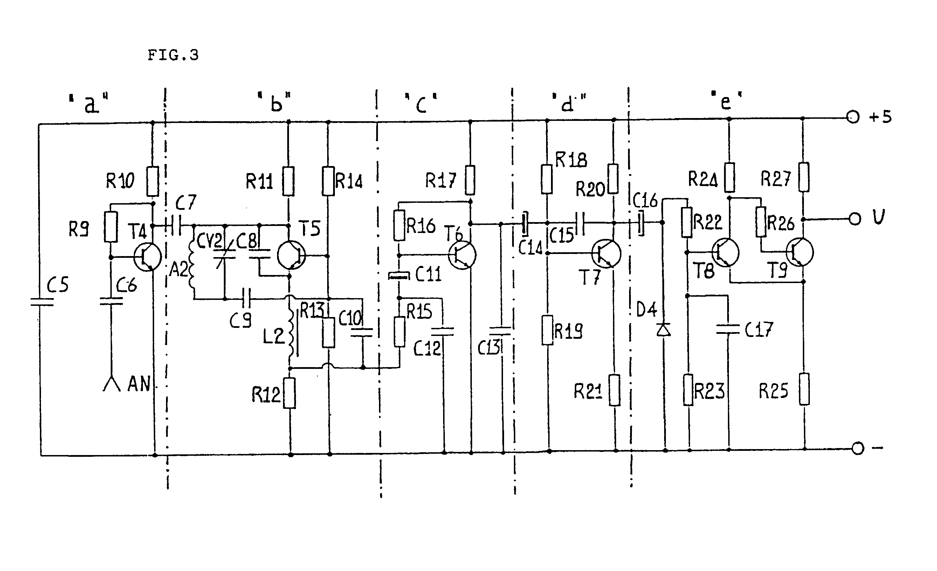

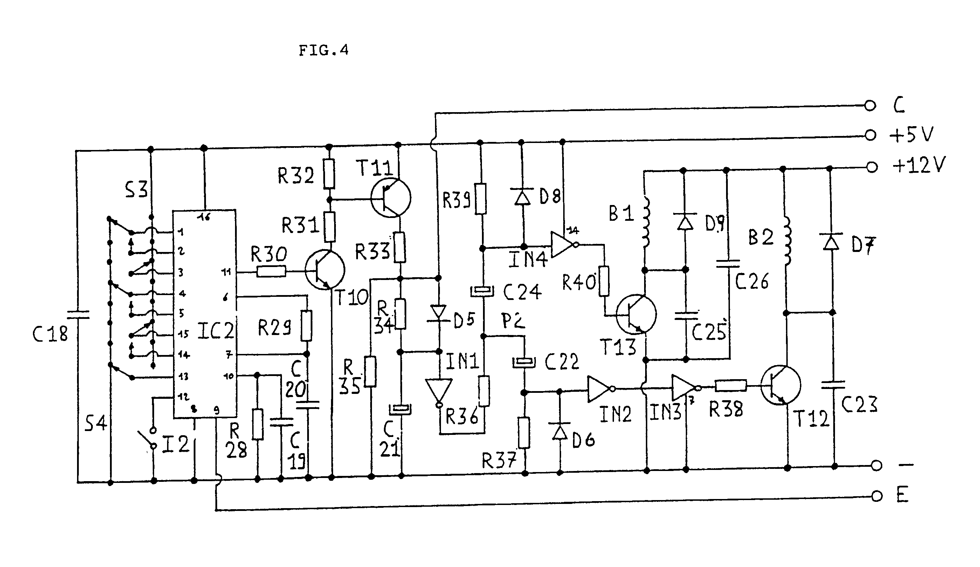

- Fig. 2, 3 and 4 are electronic diagrams.

The system of the example is a system of semiautomatic remote control of the antitheft warning system of a motor vehicle. It includes a transportable remote control I and a receiving unit II installed on the motor vehicle and connected downstream to the antitheft warning system III ; the remote control I is composed of an encoding section Ia, of a radio transmitting section Ib and of the microbattery MB supplying the above mentioned sections, while the receiving unit II is composed of the radio receiving section IIa and of the decoding section IIb. The antitheft system III is not described at it is well known to the prior art and not characteristic of the present invention.

The microbattery MB of the Sylva-Cell is composed of four piles GO-675PX, 1,35 Vcc each, series connected, and has therefore 5,4 Vcc and a capacity of 220 mA/h with a life of No. 11.000 operation hours with a mean current output lower than 20 mA. The encoding section Ia is composed of the integrated circuit IC1 which is an encoder MC145026 of the Motorola Semiconductors, said integrated circuit has sixteen pins, the 1, 2, 3, 4, 5, 6, 7, 9 are the eight trinary encoding pins (+, −, a) programmed during assemblage with the possibility therefore of about 6.550 different codes. In fact said pins can be connected, when being set up for assemblage, for the high state with the contacts of the conductor S1 connected to the positive of the batter MP for the low state with the contacts of the conductor S2 connected to the negative of the battery or left open, this position being the third state. The state of pin 10 too is part of the encoding, and it is "open" when the switch I1 is open while it can be low when the switch I1 is closed to ground through hand operating the relevant push button by the person having a remote control. Said switch I1 is connected to said pin 10 through the protection diode D1 (1N4148) and to the output of the pin 14 through the pulldown diode D2 (1N4148).

The pins 16 and 8 are respectively connected to the positive and the negative for the supply of the integrated circuit and to the protection capacitor C1 (100 kpF), the pin 12 with the capacitor C2 (330pF) and the pins 11 and 13 with the resistors R1 (1Mo) (in the example the small letter "o" shall be used to indicate the resistance unit, viz. the ohm) and R2 (470ko), which complete the inner oscillator of IC1, and the time constant R2xC2 being equal to 1/2,3 the clock time ; the pin 14, connected internally to a pullup, upon receiving a low impulse determines the integrated circuit beginning to operate i. e. a parallel reading of the nine encoding pins state and then a second reading and as consequence the output from the pin 15 of a sequence of impulses corresponding namely sequentially to the states of the said encoding pins, each output bit being composed of two high impulses in the bit period ; if the state of the corresponding pin is high the said impulses are both short, if the state is low they are long and if the state is open, one long and one short, being therefore the output message of IC1, in consequence of a negative impulse at pin 14, composed of two words equal one another composed each of nine bit periods. The integrated circuit IC1 is connected through the pin 14 to a Schmith trigger, composed of the two transistors BC239 C T1 and T2 with the relevant resistors R3 (47ko), R4 (2,2Mo), R5 (15Mo), and through the pin 15 to the resistor R6 (390ko), to the diode 1N4148 D 3 and to the capacitor C3 (33kpF) and to the resistor R7 (220ko). When the battery MB is assembled a low voltage immediately occurs at point P1 and therefore T2 is not turned on, but through R4, T1 is turned on, which immediately determines a low impulse to the pin 14, this as said above causes the integrated circuit to start, which for each low impulse outputs from the pin 15 a message composed of two words, which through R6 and D3 arrives in the point P1 and then charges very quickly C3, while, the output seding of the message stopped, C3 starts a slow discharge through R5, the emitter of T2 and R3, T2 remains thus turned on with the consequence that T1 does nomore conduct and therefore the pin 14 remains insulated and as a consequence the integrated circuit IC1 does nomore send output signals from the pin 15 ; when the discharge current of C3 decreases below a predetermined value T2 is turned off and through R4, T1 is turned on again, thus causing a low impulse to the pin 14 so repeating the described cycle, in the sense that the message composed of two words is sent with a period which is predetermined by the values of the components mentioned and particularly of C3, the said period being 1,8 sec, while the length of the message and namely of the two words and of the short interval between one and the other word is much lower and namely 10 msec. The impulses of the message arrive through resistor R7 to the radio transmitter Ib and determine an emission of waves according to the modulation corresponding to the message codification. The transmitter Ib includes the capacitor C4 (3, 3pF), the transistor amplifier BF199 T3, the resistor R8 (2,2ko), the adjustable capacitor CV1 from 2,5 to 6pF, the coil A1, with a $\varnothing$ 1 mm turn and 10 mm inside diameter, which operates both as oscillating circuit with CV1 and as antenna, and the inductance L1, 10 µH. The radio-receiver IIa of the section II is composed of a HF (high frequency) amplifier "a", of a super-reactive receiver "b", of two stages "c" and "d" for LF (low frequency) amplification, and a pulse shaping section "e".

The HF amplifier "a" is composed of the transistor BFR91 T4 with the resistors R9 (47ko) and R10 (560o), the capacitors C5 (1kpF) and C6 (6,8pF) and the antenna AN ; the super-reactive receiver "b" includes the capacitors C7 (0,68pF), C8 (3,3pF), C9 (33pF) and C10 (270pF), the adjustable capacitor CV2 from 2,5 to 6pF, the coil A2 with 2,5 Ø 1mm copper turns and 4,6 mm inside diameter and 1mm distance between the turns, the inductor L2 (10 µH), the resistors R11 (10ko), R12 (15ko), R13 and R14 (82ko), transistor BFR91 T5 ; the first stage "c" of the low frequency amplifier includes the transistor BC239C T6 with the resistors R15 (47ko), R16 (4,7Mo) and R17 (10ko), the capacitors C12 and C13 (both 1kpF), and the 2,2 µF electrolytic capacitor C11, while the second stage "d" of said amplifier includes the transistor BC239C T7 with the resistors R18 (560ko), R19 (82ko), R20 (8,2ko) and R21 (100o) and the electrolytic capacitor C14 (2,2 µF) and the capacitor C15 (330pF) ; the pulse shaping section "e" is composed of the electrolytical capacitor C16 (2,2 µF), the diode AA117 D4, the Schmith trigger including the resistors R22 (47ko) and R23 (220ko) the transistors BC132B T8 and T9, the resistors R24 (33ko) R25, (220o), R26 and R27 (10ko) and the capacitor C17 (1kpF). The terminals +5 and – of the receiver are respectively connected to the voltage regulator LM2931 of the National Semiconductors, which is not indicated in the figure and supplied by the vehicle battery; the output U of the receiver, that is the collector of T9, is connected to the input E of the decoder IIb. This includes the integrated circuit IC2 which is a Motorola decoder MC145028 of the same family of the MC145026 encoder of the remote control I. It is provided with sixteen pins, eight of which, viz. 1, 2, 3, 4, 5, 15, 14, 13 are connectable, when arranging for assemblage respectively to the contacts of the conductors S3 and S4 connected to the positive the first one and to the negative the second one, or may remain open so as to establish the same encoding which the pins 1, 2, 3, 4, 5, 6, 7, 9 of the integrated circuit IC1 of the encoder Ia have been prepared with, while pin 12, which also is part of the code, is connected to the negative or left open according to the closed or open position of the switch 12 of the bistable relay DS2 of the SDS-Relais Italia s.r.l., which includes the two control coils B1 and B2.

The pins 16 and 8 of IC2 are connected respectively to the positive and to the negative output of the said voltage regulator and the protection capacitor C18 (100kpF) is parallel connected with them ; the pins 6 and 7 are connected through the resistor R29 (560ko) and the capacitor C20 (1kpF) to ground, while the pin 10 is connected to ground through the resistor R28 (120ko) and the capacitor C19 (100kpF) ; the pin 9 is connected to the input E of the decoding section IIb and therefore to the output U of the receiving section IIa and receives therefore in low frequency the messages which are transmitted by the remote control I, while the output of pin 11 is a signal of valid transmission when the signals received to pin 9 correspond to the encoding of IC2, and to said pin 11 are connected the Schmith trigger including the transistor NPN T10 (BC182B) and the PNP T11 (BC212B) and the relevant resistors R30 (22ko), R31 (560o) and R32 (10ko) and R33 (22o), said trigger is connected through the collector of T11 and R33 to the output C of the decoding section, which acts on the control of the protection devices III, and in addition on the control units of the coils B1 and B2, which control the switch 12 through the circuit including the resistors R34 (330ko), R35 (4,7ko) and R36 (1ko), the electrolytic capacitor C21 (22 µF), the diode D5 (1N4148) the inverting Schmith trigger IN1 being part of the integrated circuit MM75C14 Hex Schmith Trigger of the National Semiconductors including six units IN1-IN6, only four of which are used in the described circuit ; the circuit controlling the coil B2 of the relay includes the electrolytic capacitor C22 (2,2 µF), the resistor R37 (470ko), the diode D6 (1N4148), the inverting triggers IN2 and IN3, the resistor R38 (3,3ko), the transistor NPN T12 (PN2222A) the capacitor C23 (100kpF) and the diode D7 (1N4008), while the unit controlling the coil B1 includes the electrolytic capacitor C24 (2,2 µF), the resistor R39 (470ko) the diode D8 (1N4148), the inverting trigger IN4 the resistor R40 (3,3ko), the transistor PNP T13 (PN2222A) the diode D9 (1N4004) and the capacitors C25 and C26 (100kpF). The coils B1 and B2 are respectively connectable to the negative through the collectors of the transistors T13 and T12 and are connected to the positive of the 12 Vcc board battery, whereto also the protection diodes D7 and D9 are connected.

The unit composed of R29 and C20 which are connected to pins 6 and 7 serves for determining if the input impulses to the pin 9 are short or long as their codification has just been a pulse width modulation, and the constant R29xC20 is fixed in 1,72 times the clock period and therefore in 3,95 the time constant R2xC2 of the encoder, Ia while the time constant R28xC19 is 33,5 times the clock period and determines the duration of the valid transmission pulse. The system operates therefore as follows.

When the driver leaves the vehicle and moves away from it the antitheft system is disconnected and therefore the predetermined encoded message which is continuously transmitted by the remote control and which is in the example "-a+-a+a-a", the last code is in fact "a" as the pin 10 of IC1 of the remote control is open being the switch I1 open, continues to be received by the receiver IIa and passed to the decoder-comparator IIb which finds it to be as predetermined because during disconnection the switch I2 is open and therefore the codification of the decoder is also "-a+-a+a-a", and therefore pin 11 of IC2, actuated by the positive impulse of the signal arriving to pin 9, continues to send positive impulses of valid transmission, these impulses bring in conduction T10, the negative collector of which turns on the transistor NPN T11, the collector of which brings therefore positive impulses through R33 to the terminal C for actuation of the protection devices control, corresponding to said positive signals the disconnection of the protection devices ; furthermore the positive impulses downstream of R33 cause through D5 the quick charge of C21 (time constant C21xR33) while the time of its discharge corresponding to the time constant C21xR34 is not only much higher than the time of its quick charge but also than the duration of the signal of valid transmission coming from pin 11, corresponding to the time constant C19xR28, as a consequence said positive upstream of IN1 determines a negative downstream of IN1 and R36 in the point P2 of the circuit, which negative causes the charge of C24 according to the time constant (C24xR39) and therefore a positive downstream of IN4, which brings in conduction, through R40, the transistor T13 the collector of which, therefore going to ground, causes the excitation of the coil B1 which controls opening of 12, which remains then open.

When the person having the remote control has sufficiently moved away from the motor vehicle, the receiver IIa stops to receive the messages of the remote control and as a consequence the signal to pin 9 of IC2 stops, the latter blocks and does nomore send signals of valid transmission to pin 11, the result is the turning off of T10 and consequently of T11 and therefore the collector of T11 and the terminal C become negative for their connection to ground through R35 ; said negative causes through terminal C the control of connection of the protection devices and through R34, IN1 and R36 a positive point P2 and therefore the charge (time constant C22xR37) of C22 and consequently a positive impulse upstream of IN2 which becomes again positive downstream of IN3 and through R38 brings T12 in conduction, which in turn determines through the negative of its collector the excitation of the coil B2 which closes the switch 12, which remains then closed. As a consequence when the person having the remote control approaches again the motor vehicle the codification of the message transmitted by the remote control is "-a+-a+a-a", and does nomore correspond to the one of the decoder which is now "-a+-a+a--", as the pin 12 of IC2 is to ground, the said person has therefore to act manually on the control push button of the switch I1 of the remote control so that the pin 10 of IC1 is connected to ground and therefore the codification of the output message also becomes "-a+-a+a--", as the one of the decoder, so that IC2 upon income of said signal to pin 9 outputs from pin 11 the positive signal of valid message and as a consequence turns T10 and T11 on and, as already described above, positive impulses are brought to terminal C for controlling the disconnection of the protection devices and coil B1 which controls opening of 12 is turned on, which remains therefore open and its closure shall only be possible automatically by the coil B2 when the connection of the protection devices shall be automatically controlled again.

## Claims

1. System for the remote control of the antitheft protection devices of a property composed of a portable remote control unit, including at least a transmitter, a power source and a encoder, and of a receiver unit installed near the property and mechanically and/or eletrically connected to the control of the protection devices, and including at least a receiver, a specific power source or devices for connection to a distribution network or to accumulators of said power employed for other maim uses and a decoder-comparator,

characterized in that the encoder of the portable remote control unit is partly programmed during assemblage and partly programmable by hand control during operation, and suited to supply the transmitter in such a way that the latter sends in continuous repetition a codified message, and the decoder-comparator of the receiver unit is also partly programmed during assemblage and partly programmable during operation, suited for decoding and matching the encoded signals picked up by the receiver,

and, when the receiving of said recognised signals stops, for sending a signal for controlling the connection of said protection devices and for modifying automatically the programmable part of the code of the decoder itself, and when signals are successively received and recognised having the code modifyed in the programmable part through the hand control of the encoder of the remote control unit, for sending on the contrary a signal for controlling the disconnection of said protection devices and for modifying again the programmable part of the code of the decoder itself, operating so the remote control of the property in an semiautomatic way, and that is in an authomatic way for the connection of said protection devices only by the action of moving away from the property of the person having the portable remote control unit without requiring a voluntary control of said person and in a manual way for controlling the disconnection of said devices but only after the person having the portable unit has approached the property within a predetermined range.

2. System as claim 1 characterized in that the transmitter and the receiver are suited for sending and respectively receiving radio waves and the encoder of the transmitter consists of a device suited for sending messages consisting of sequences of signals with pulse width modulation based upon the encoding partly programmed during assemblage and partly programmable through hand control during operation and having short length, within the range even of milliseconds, at intervals one from the other much longer than the above mentioned length, within the range of seconds and more, the said times being so predetermined and the components of the transmitting unit being so selected that the transmission of intermittent messages involves, in spite of their continuity, a power consumption so limited that a normal micropile, rechargeable or not, can ensure the continuous operation of the transmitting unit for one and even more years, and furthermore the receiver unit includes a decoder suited for causing the connection of the said protection devices after a predetermined time of non-reception of messages, which time is generally determined on the base of a predetermined number of expected encoded messages, and in addition suited for causing the signal controlling the disconnection of said devices as soon as the first or at the most the second expected message is received with modified encoding for disconnection.

**Ansprüche**

1. Anlage zur Fernsteuerung von Schutzeinrichtungen gegen Diebstahl eines Eigentums bestehend aus einer tragbaren Fernsteuereinheit, die zumindest einen Transmitter, eine Leistungsquelle und einen Kodierer enthält, sowie aus einer Empfängereinheit, welche nahe dem Eigentum angeordnet ist und mechanisch und/oder elektrisch mit der Steuereinheit der Schutzeinrichtungen verbunden ist sowie zumindest einen Empfänger, eine eigene Leistungsquelle oder Einrichtungen zur Verbindung mit einem Verteilernetzwerk oder mit Ankkmulatoren der genannten Leistungsquelle, welche für andere Hauptzwecke eingesetzt ist, sowie einen Dekoder-Komperator enthält, dadurch gekennzeichnet, daß der Kodierer der tragbaren Fernsteuereinheit teilweise während der Montage programmiert wird und teilweise während des ßetriebes durch Handsteuerung programmierbar ist und geeignet ist, den Tansmittor derart zu speisen, daß letzterer fortgesetzt wiederholend eine kodierte Nachricht aussendet, sowie daß der Dekoder-Komparator der Empfängereinheit gleichfalls teilweise während der Montage programmiert wird und teilweise während des Betriebes programmierbar ist, wobei er geeignet ist, die kodierten Signale, welche vom Empfänger aufgenommen werden, zu dekodieren und zu vergleichen, und sobald der Empfang der genannten erkannten signale endet, ein Signal, zur steuerung der Verbindung der genannten Schutzeinrichtungen und zur automatischen Änderung des programmierbaren Teiles des Kodes des Dekoders selbst abzugeben und, sobald Signale aufeinanderfolgend empfangen und erkannt werden, deren Kode im programmierbaren Teil durch die Handsteuerung des Kodierers der Fernsteuereinheit geändert wurde, demgegenüber ein Signal zur Steuerung der Unterbrechung der genannten Schutzeinrichtungen und wiederum zur Änderung des programmierbaren Teiles des Kodes des Dekodierers selbst abzugeben, wobei die Fernsteuerung des Eigentums in halbautomatischer Weise wirkt, nämlich in automatischer Weise für die Verbindung der genannten Schutzeinrichtungen nur durch die Tätigkeit des Wegbewegens vom tigentum derjenigen Person, welche die tragbare Fernsteuereinheit aufweist, ohne das Erfordernis einer absichtlichen Kontrolle der genannten Person, und in manueller Weise für die Steuerung der Unterbrechung der genannten Einrichtungen, jedoch nur nachdem sich die Person mit der tragbaren Einheit dem Eigentum innerhalb eines vorbestimmten Bereiches angenähert hat.

2. Anlage nach Anspruch 1, dadurch gekennzeichnet, daß der Transmitter und die Empfängereinrichtung dafür geeignet sind, um Radiowellen sowohl zu senden als auch zu empfangen un daß der Kodierer des Transmitters aus einer Einrichtung besteht, die geeignet ist, Nachrichten zu senden, welche aus Folgen von Signalen bestehen mit einer Pulslängen-Modulation, welche auf der Kodierung, die teilweise während der Montage programmiert wird und teilweise während des Betriebes durch Handsteuerung programmierbar ist, basiert, wobei sie eine kurze Länge, selbst innerhalb des Bereiches von Millisekunden aufweist, bei Intervallen voneinander, welche viel länger als die vorstehend erwähnte Länge sind, innerhalb des Bereiches von Sekunden und mehr, wobei die genannten Zeitspannen so vorbestimmt und die Bestandteile der Transmittereinheit so ausgewählt sind, daß die Übertragung von intermittierenden Nachrichten, trotz ihrer Kontinuität, einen so beschränkten Leistungsverbrauch bedingt, daß eine normale, aufladbare oder nicht aufladbare Mikrobatterie den kontinuierlichen Betrieb der Transmittereinheit über ein Jahr oder sogar mehrere Jahre gewährleistet und daß weiter die Empfängereinheit einen Dekodierer enthält, welcher die Verbindung der genannten Schutzeinrichtungen nach einer vorbestimmten Zeit des Nicht-Empfanges von Nachrichten, welche Zeit im allgemeinen auf der Basis einer vorherbestimmten Anzahl von erwarteten kodierten Nachrichten bestimmt ist, bewirkt, und zusätzlich geeignet ist, das Signal für die Steuerung der Unterbrechung der genannten Einrichtung, sobald die erste oder höchstens die zweite erwartende Nachricht mit modifizierter Kodierung für die Unterbrechung empfangen worden ist, zu bewirken.

## Revendications

1. Système pour la commande à distance des dispositifs de protection antivol d'une propriété, composé d'une unité de commande à distance portative, laquelle comprend au moins un émetteur, une source d'énergie et un codeur, et d'une unité réceptrice installée à proximité de la propriété et connectée mécaniquement et/ou électriquement à la commande des dispositifs de protection, unité qui comprend au moins un récepteur, une source d'énergie propre, ou des dispositifs permettant de le connecter à un réseau de distribution d'énergie ou à des accumulateurs de ladite énergie qui servent pour d'autres utilisations principales, et un décodeur-comparateur, caractérisé en ce que le codeur de l'unité de commande à distance portative est partiellement programmé au montage et partiellement programmable par commande manuelle pendant le fonctionnement, et approprié pour alimenter l'émetteur de telle manière que celui-ci émette un message codé en répétition continue, et le décodeur comparateur de l'unité réceptrice est lui aussi partiellement programmé au montage et partiellement programmable pendant le fonctionnement, et approprié pour décoder les signaux codés captés par le récepteur et se conformer à ces signaux, et lors de la réception desdits signaux reconnus, émettre un signal servant à commander la mise en circuit desdits dispositifs de protection et à modifier automatiquement la partie programmable du code du décodeur, et, lors de la réception et de la reconnaissance consécutive de signaux ayant le code modifié dans la partie programmable par la commande manuelle du codeur de l'unité de commande à distance, émettre au contraire un signal servant à commander la mise hors circuit desdits dispositifs de protection et à modifier de nouveau la partie programmable du code du décodeur lui-même, en commandant ainsi la commande à distance de la propriété d'une façon semi- automatique, à savoir dans un mode automatique pour mettre lesdits dispositifs de protection en circuit par le seul effet d'éloignement de la personne portant l'unité de commande à distance portative par rapport à la propriété sans exiger de commande volontaire de ladite personne, et dans un mode manuel, pour commander la mise hors circuit desdits dispositifs mais seulement après que la personne portant l'unité portative s'est approchée de la propriété jusqu'à moins d'une distance prédéterminée.

2. Système selon la revendication 1, caractérisé en ce que l'émetteur et le récepteur sont appropriés pour émettre et recevoir respectivement des ondes radio et le codeur de l'émetteur est composé d'un dispositif approprié pour émettre des messages qui sont constitués par des segments de signaux comportant une modulation de la largeur des impulsions basée sur le codage partiellement programmé au montage et partiellement programmable par commande manuelle pendant le fonctionnement, les impulsions étant courtes, de l'ordre de grandeur de quelques millisecondes, et se succédant à des intervalles beaucoup plus longs que la longueur mentionnée plus haut, de l'ordre de quelques secondes ou plus, lesdits temps étant prédéterminés et les composants de l'unité émettrice étant sélectionnées de manière que la transmission de messages intermittents n'entraîne, en dépit de leur continuité, qu'une consommation de puissance suffisamment limitée pour qu'une micro-pile normale, rechargeable ou non, puisse assurer le fonctionnement continu de l'unité émettrice pendant une ou même plusieurs années, et, en outre, l'unité réceptrice comprend un décodeur approprié pour provoquer la mise en circuit desdits dispositifs de protection après un temps prédéterminé de non réception de message, lequel temps est généralement déterminé sur la base d'un nombre prédéterminé de messages codés attendus, et approprié en outre pour engendrer le signal qui commande la mise hors circuit desdits dispositifs dès que le premier, ou au maximum le deuxième message attendu, est reçu avec un codage modifié pour la mise hors circuit.

FIG.1

FIG.2

EP 0 229 869 B1

FIG.3

"a"   "b"   "c"   "d"   "e"   +5

R10  R11  R14  R17  R18  R20  C16  R24  R27  V

R9  T4  C7  CV2  C8  T5  R16  T6  C14  C15  T7  R22  R26  T8  T9

C5  C6  A2  R13  C10  C11  R15  C12  C13  R19  D4  C17  R26

C9  L2  R12  R15  C12  R19  R21  R23  R25

AN

FIG.4